# EUROPEAN PATENT SPECIFICATION

(11) **EP 0 798 180 B1**
(45) Date of publication and mention of the grant of the patent: **22.01.2003**
(21) Application number: 97104521.6
(22) Date of filing: 17.03.1997
(51) Int. Cl.: B60R 25/02

(54) **Theft detection mechanism and anti-theft device for vehicle**
Diebstahldetektor-Vorrichtung für Fahrzeuge
Dispositif détecteur de vol et dispositif antivol pour véhicules

(30) Priority: 26.03.1996 JP 7055996
(43) Date of publication of application: 01.10.1997
(73) Proprietor: HONDA GIKEN KOGYO KABUSHIKI KAISHA, Minato-ku Tokyo (JP)
(72) Inventor: Yamashita, Akihiko, K.K. Honda Gijutsu Kenyusho, Wako-shi, Saitama (JP)
(74) Representative: Herzog, Markus, Dipl.-Phys. Dr.

(56) References cited:
- GB-A- 2 267 727
- US-A- 5 229 747
- US-A- 5 410 898
- PATENT ABSTRACTS OF JAPAN vol. 011, no. 028 (M-557), 27 January 1987 (1987-01-27) & JP 61 200048 A (DAIHATSU MOTOR CO LTD), 4 September 1986 (1986-09-04)

## Description

The present invention relates to a theft detection mechanism and a anti-theft device for a vehicle.

Anti-theft devices for a vehicle includes ① a device which has a sensor for sensing vibration, infrared rays, ultrasonic sound or the like or a circuit for detecting a break in a specific circuit near a steering wheel and sounds an alarm by the signal of the above described sensors or circuit when a theft is carried out, ② " Anti-theft alarm device for motorcycle" described by Japanese Unexamined Utility Model Publication No. 57-27669 and ③ " Alarm device for motorcycle " described by Japanese Unexamined Patent Publication No. JP 7-223508.

In the above described prior art ②, the anti-theft alarm device has an alarm circuit and an engine ignition circuit which are selectively turned on or off by a selector switch and sounds an alarm when the alarm circuit is selected by the selector switch and an alarm switch attached on a handle grip is turned on by gripping the handle grip.

In the above described prior art ③, the alarm device is set in a state in which an ignition switch is set at an alarm position and a key is taken out from the alarm position and a car body is held using a stand. When the stand is put in a housing position by a third person, an alarm sounding device is energized by a stand switch attached on the stand to sound an alarm.

The sensors of the anti-theft device of the prior art ① described above have the incoveniences of sounding an alarm, for example, when the vehicle body is touched and vibrated by mistake although the theft is not carried out or when turning off a switch for activating the above described sensors is forgotten. Moreover, the sensors described above have the inconveniences of having a complex mechanism and being expensive, too.

The prior arts ② and ③ described above have a problem that a switch attached on a handle grip or a stand is activated to sound an alarm due to carelessness when the theft is not carried out.

The abstract of JP 61200048 A discloses sensors A and B detecting an axial movement of the complete cylinder block, including the outer cylinder thereof. The top ring 14 is not movable.

US-A-5 229 747 shows a common tumbler lock cylinder. The top disk is integral with a shaft and allows no axial displacement relative to the shaft which could be detected. An alarm is activated if a contact is brought in engagement with a portion of a sleeve.

G3-A-2 267 727 shows an alarm switch which is operated by the tip of the key.

US-A-5 410 898 discloses an alarm contact which is magnetically operated by a little magnet mounted on an antidust plate for closing the keyhole.

An object of the present invention is to provide a theft detection mechanism which is hard to activate in the case of other than theft and detects the theft with reliability and reduces the cost thereof and an anti-theft device having the theft detection mechanism.

In order to accomplish the above described object, according to claim 1, a theft detection mechanism of a handle lock device adapted to be built in a vehicle is provided, said lock device comprising a fixed outer cylinder;
a crank shaft rotatably mounted within the outer cylinder and defining a key inserting hole for inserting a key;
a top ring housed rotatably and movably up and down in the upper part of the lock outer cylinder and having a key hole coextending with the key inserting hole of the crank shaft, a sinking sensor with a projection abutting on the bottom surface of the lower flange of said top ring, wherein the top ring is sunk towards the lock shaft when a substance other that the key is inserted into the key inserting hole; and the sinking sensor detected that said top ring is sunk.

When a substance other than a key is inserted into a key inserting hole, the top ring is inevitably pushed down to activate the sinking sensor, thereby detecting thieving action with reliability. Moreover, this theft detection mechanism has a simple structure to reduce the cost thereof.

Preferably, the theft detection mechanism comprises a theft alarm mechanism for sounding alarm by a signal from said theft detection mechanism. The theft alarm mechanism can make the thieving action known to surroundings, thereby improving the effect of preventing theft.

Preferably, the theft detection mechanism comprises an ignition prohibiting mechanism for prohibiting ignition by a signal from said theft detection mechanism.

When the thieving action is detected, the engine cannot be started, therey making it difficult to thieve a vehicle.

Preferably, the theft detection mechanism comprises a thieving action detection mechanism provided with at least one of a vibration sensor, an ultrasonic sensor, an infrared sensor, and an electric circuit break detection sensor mounted on a body of the vehicle for detecting thieving action.

Various kinds of thieving actions are reliably detected by the different functions of the various kinds of sensors.

Preferably, the theft detection mechanism comprises a theft alarm mechanism for sounding an alarm by a signal from said theft detection mechanism or said thieving action detection mechanism.

The thieving actions can be reliably detected by the different functions of the various kinds of sensors and the effect of preventing theft can be improved by the theft alarm mechanism.

Preferably, the theft detection mechanism comprises an ignition prohibiting mechanism for prohibiting ignition by a signal from said thieving action detection mechanism or said theft detection mechanism for a vehicle.

When the thieving action is detected, the engine cannot be started, thereby making it difficult to thieve the vehicle.

The preferred embodiments of the present invention are hereinafter described based on the accompanying drawings.

Fig. 1 is a perspective view of a front part of a motorcycle provided with a handle lock device according to the present invention.

Fig. 2 is a plan view of a main switch provided with a handle lock device according to the present invention.

Fig. 3 is a sectional view taken on a line 3-3 in Fig. 2.

Fig. 4 is a sectional view of a handle lock device according to the present invention in a lock position.

Fig. 5 is a block diagram of an anti-theft device according to the present invention.

Fig. 6 is a block diagram of another example of an anti-theft device according to the present invention.

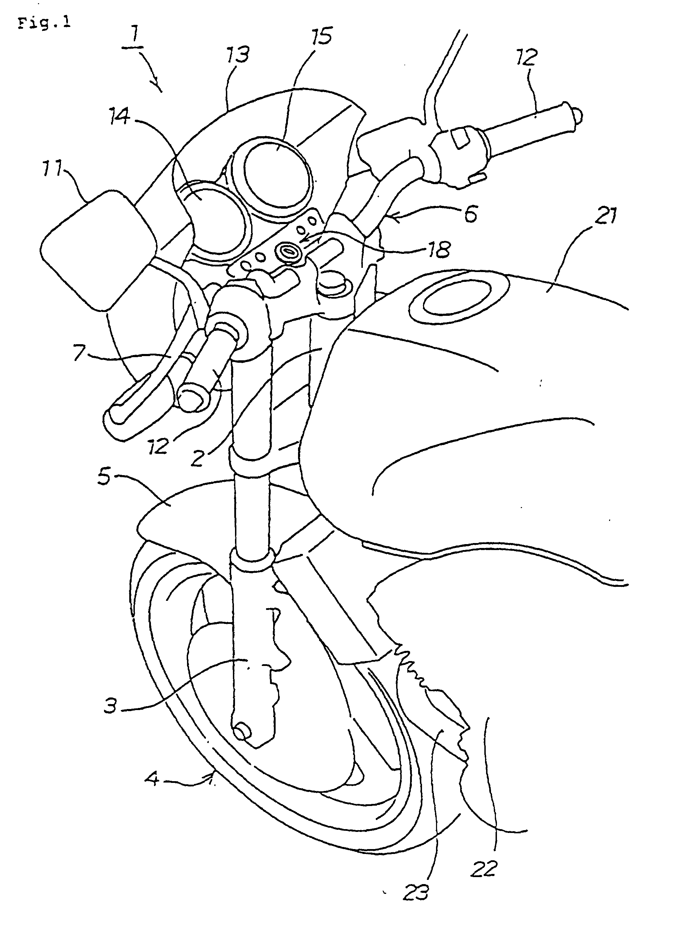

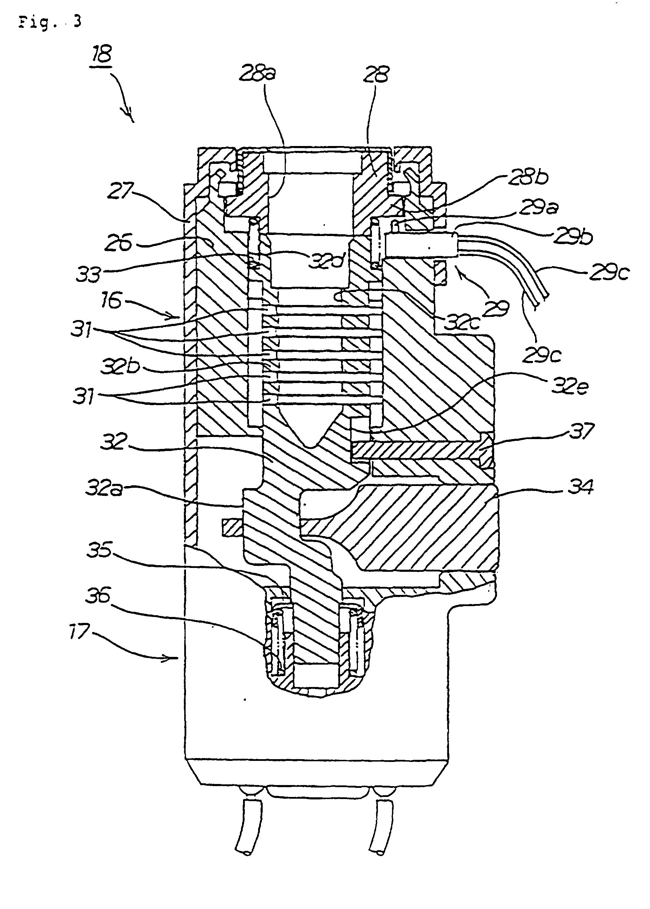

Fig. 1 is a perspective view of the front part of a motorcycle provided with a handle lock device according to the present invention. The motorcycle 1 is provided with a steering head 2 mounted on the front part of a frame not shown in the drawing, a front fork 3 mounted on the steering head 2 swinging via a handle post not shown in the drawing, a front tire 4 with a wheel mounted at the end of the front fork 3, a front fender 5 covering the upper part of the front tire 4, a handle 6 integrally swinging the front fork 3, clutch levers 7 and front brake levers (not shown in the drawing) and back mirrors 11, 11 (right-side mirror is not shown in the drawing) mounted on the right side and the left side of the handle 6, grips 12, 12 mounted on the right side and the left side of the handle 6, a main switch 18 mounted on the front part of the steering head 2 and having a windshield 13, a speedometer 14, a tachometer 15 and a handle lock device 16 (see Fig. 3), a fuel tank 21 mounted on the upper part of the frame in the rear of the steering head 2, an engine 22 mounted on the frame under the fuel tank 21, and an exhaust pipe 23 extending from the front part of the engine 22.

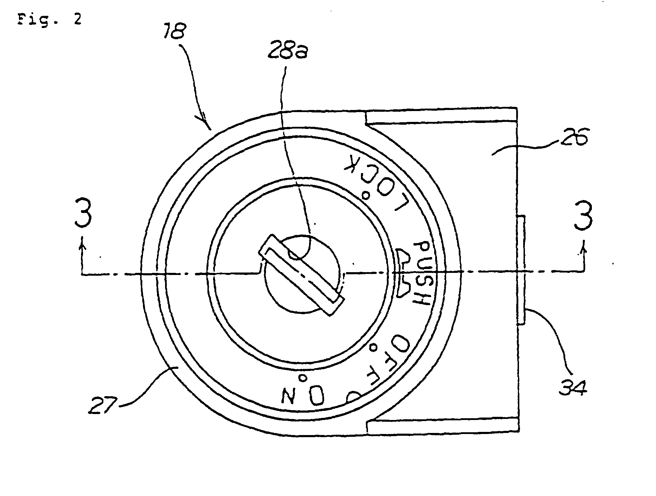

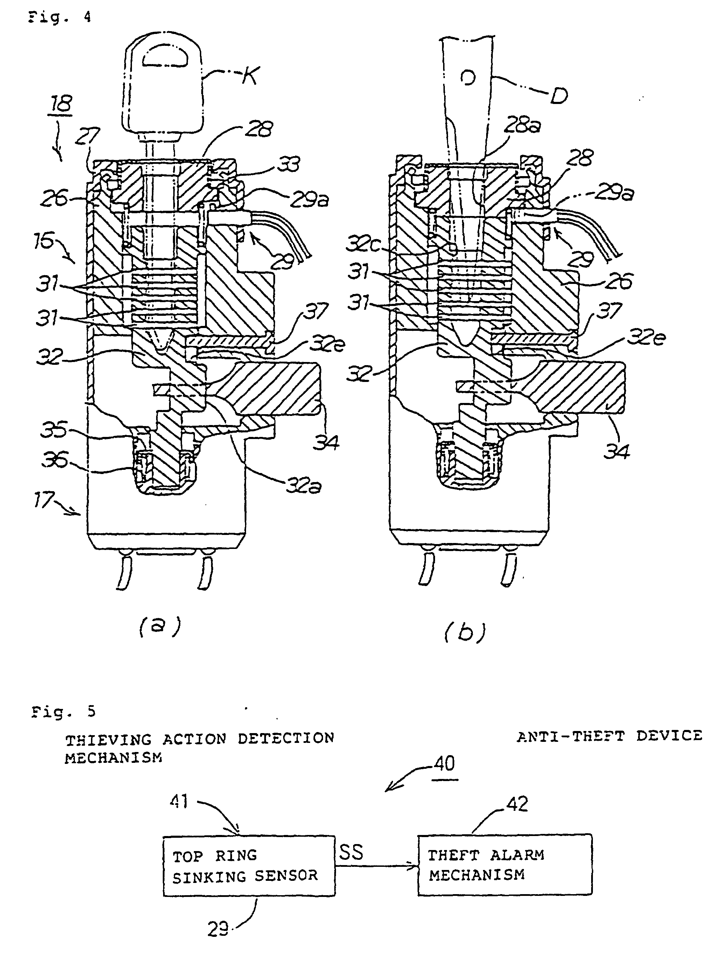

Fig. 2 is a plan view of the main switch having the handle lock device according to the present invention and the main switch 18 has on the surface thereof a key hole 28a and indicators of OFF, ON, PUSH and LOCK for indicating the rotated positions of the key K (see Fig. 4 (a)).

When the key is at the position of OFF, the engine is in a state of stop and the handle is in a state of unlocking and the key can be inserted in the key hole.

When the key is turned to the position of ON, the engine becomes in a state of starting and can start if a starting switch is turned on. Of course, the handle is in a state of unlocking.

When locking the handle, in Fig. 1, turn the handle 6 to the left or the right to the limit and insert the key K of the main switch 18 at the position of OFF and then turn the key K counterclockwise to the position of LOCK, in Fig. 2. The key K is returned to the position of the original height by a pushing-up force from below and then handle is locked. The key K can be taken out at this LOCK position.

Fig. 3 is a sectional view taken on a line 3-3 in Fig. 2 and shows a state in which the key is in a position of OFF.

The main switch 18 comprises an upper handle lock device 16 and a lower ignition switch section 17.

The handle lock device 16 comprises a lock outer cylinder 26 attached to a vehicle body, a cover 27 for covering the lock outer cylinder 26, a top ring 28 housed rotatably and movably up and down in the upper part of the lock outer cylinder 26 and having a key hole 28a, a sinking sensor 29 whose projection 29a abutting on the bottom surface of the lower flange 28b of the top ring 28 is moved down to detect the sinking of the top ring 28, a crank shaft 32 provided with tumblers 31... (... shows a plurality of items. The same goes for the following.) housed in the lower part of the top ring 28 rotatably and movably up and down and retracted in a straight part 32b by inserting the key K (see Fig. 4(a)) into key inserting hole 32c of the straight part 32b of the upper part of the crank part 32a, a coil spring 33 disposed in an annular groove 32d formed in the upper part of the crank shaft 32 and pushing up the top ring 28, a lock pin 34 locked or unlocked by the crank part 32a of the crank shaft 32, a coil spring 36 for pushing up the crank shaft 32 via a retainer 35, and a control pin 37 which is fixed on the key outer cylinder 26. and whose tip is inserted into a cam groove formed in the side of the crank shaft 32 and for controlling up-and-down movement and rotation of the crank shaft 32.

The sinking sensor 29 is connected to theft alarm mechanisms 42, 52 described below and turned on when the projection 29a is moved down, thereby activating the theft alarm mechanisms 42, 52 to sound an alarm. In this respect, 29b is a main body of the sinking sensor 29 and 29c and 29c are lead wires.

An action of the handle lock device described above is described in the following.

Figs. 4 (a) and (b) are sectional views of the handle lock device according to the present invention in a position of locking and Fig. 4 (a) shows a state in which the key is inserted and (b) shows a state in which a foreign substance is inserted.

In Fig. 4 (a) , if the key is turned counterclockwise to a position of LOCK with the key pushed in a position of OFF shown in Fig. 2, the crank part 32a of the crank 32 is moved from the left to the right in the drawing and then one end of the lock pin 34 engaging with the crank part 32a is moved from the left to the right in the drawing to protrude from the inside of the handle lock device to the outside thereof. In this state the top ring 28 is not sunk and thus the projection 29a of the sinking sensor 29 is not moved down nor turned on.

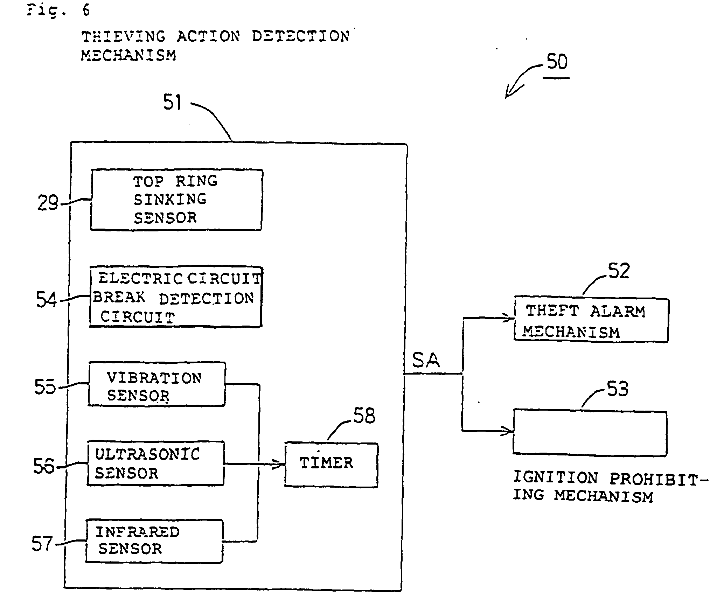

In Fig. 4 (b) , when the handle is locked and a foreign substance D such as a pair of scissors, a screw driver or the like is inserted into a key hole 28a, it is difficult to turn the crank shaft 32 forcefully because the tumblers 31 are engaged with the key outer cylinder 26 and the cam shaft 32e formed on the crank shaft 32 is engaged with the control pin 37. In this case, if the crank shaft 32 is pushed down, the cam shaft 32e formed on the crank shaft 32 is disengaged from the control pin 37 and thus only the tumblers 31 are engaged with the key outer cylinder 26. But when the foreign substance D is pushed in the key hole, the top ring 28 is sunk and thus the projection 29a of the sinking sensor 29 is moved down to turn on the sinking sensor 29 and thus to activate the theft alarm mechanisms 42, 52 (see Fig. 5, Fig. 6), thereby sounding an alarm and preventing theft.

As described above, thieving action of turning the crank shaft 32 by inserting a foreign substance D inevitably sinks the top ring 28 and thus is detected by the sinking sensor 29 with reliability. Moreover, in a usual use of the motorcycle, there is no possibility that the top ring 28 is sunk and therefore an alarm is not sounded by mistake.

Fig. 5 is a block diagram of an anti-theft device according to the present invention. The anti-theft device 40 comprises a thieving action detection mechanism 41 provided with a top ring sinking sensor 29 and a theft alarm mechanism 42 for sounding an alarm based on a signal SS from the thieving action detection mechanism 41 (sinking signal of the top ring 28).

Since the anti-theft device 40 is simply composed as described above, it is not expensive and thus is applied to an inexpensive motorcycle. Moreover, it can detect thieving action with reliability.

Fig. 6 is a block diagram of another example of an anti-theft device according to the present invention. The anti-theft device 50 comprises a thieving action detection mechanism 51 including various kinds of sensors, a theft alarm mechanism 52 for sounding an alarm based on a signal SA from the thieving action detection mechanism 51 and an ignition prohibiting mechanism 53 for prohibiting the engine mounted on the vehicle from igniting based on the signal from the thieving action detection mechanism 51.

The thieving action detection mechanism 51 comprises a top ring sinking sensor 29, at least one of or a plurality of an electric circuit break detection circuit 54 for detecting a break in a wire connected to an ignition switch, a vibration sensor for detecting the vibration of the vehicle, an ultrasonic sensor for detecting movement of the vehicle with ultrasonic sound and an infrared rays sensor 57 for detecting the movement of the vehicle with infrared rays, and a timer 58 for setting the time required to start working the vibration sensor 55, the ultrasonic sensor 56 and the infrared sensor 57.

An action of another example of the thieving action detection mechanism described above is described in the following.

Following actions are thought as thieving actions.
① To cut a wire connected to an ignition switch with a nipper or the like and to connect the wire to make a state of ignition on.
② To break a handle lock device with tools to unlock it.
③ To move the whole vehicle locked by a handle lock device.

The above described thieving action ① is detected by the electric circuit break detection circuit 54.

As for the above described thieving action ②, inserting of an foreign substance into the key hole is detected by the sinking sensor 29 and vibration generated is detected by the vibration sensor 55.

As for the above described thieving action ③, the movement of the vehicle is detected by the ultrasonic sensor 56 or the infrared sensor 57. In this case, both sensors 56 and 57 measure the distance to the object such as the surface of the road or the like and detect the change of the distance. However, it is difficult for the ultrasonic sensor 56 to detect the change of the distance if the object is a sound-absorbing material and it is also difficult for the infrared sensor 57 to detect the change of the distance if the object has a shine or an infrared radiating section is made dirty.

As described above, both sensors 56 and 57 have defects described above but it is possible to detect thieving action by compensating the defects with combining these sensors.

The thieving action detection mechanism 51 sends a signal SA to the theft alarm mechanism 52 and'the ignition prohibiting mechanism 53 by the detection signal from the sensors described above and then the theft alarm mechanism 52 sounds an alarm and the ignition prohibiting mechanism 53 prohibits ignition.

Accordingly, the above described thieving action detection mechanism can respond to almost all thieving actions with reliability because it is provided with various kinds of sensors and even if a state of ignition-on occurs, the engine is not ignited to make it impossible to start the engine, thereby making it difficult to thieve the vehicle.

The present invention produces the following effects by the above described constitution.

Since the theft detection mechanism of the vehicle claimed in claim 1 comprises a top ring which is sunk when a foreign substance other than the key is inserted into the key inserting hole and a sinking sensor for detecting that the top ring is sunk, the top ring is inevitably sunk when a foreign substance other than the key is inserted into the key inserting hole to activate the sinking sensor, thereby detecting the thieving action with reliability. Moreover, this theft detection mechanism has a simple structure to reduce the cost thereof.

Since the anti-theft device for the vehicle claimed in claim 2 comprises the theft detection mechanism of the vehicle as claimed in claim 1 and the theft alarm mechanism for sounding an alarm by a signal from the theft detection mechanism of the vehicle, it can make the thieving action known to surroundings by the theft alarm mechanism, thereby improving the effect of preventing theft.

Since the anti-theft device for the vehicle claimed in claim 3 comprises the theft detection mechanism of the vehicle as claimed in claim 1 and the ignition prohibiting mechanism for prohibiting ignition by a signal from the theft detection mechanism of the vehicle, if the thieving action is detected, the engine can not be started, thereby making it difficult to thieve the vehicle.

Since the anti-theft device for the vehicle claimed in claim 4 comprises the anti-theft detection mechanism for the vehicle as claimed in claim 2 and the ignition prohibiting mechanism for prohibiting ignition by a signal from the theft detection mechanism of the vehicle, if the thieving action is detected, the engine can not be started, thereby making it difficult to thieve the vehicle.

Since the anti-theft device for the vehicle claimed in claim 5 comprises the theft detection mechanism of the vehicle as claimed in claim 1 and the thieving action detection mechanism provided with at least one of the vibration sensor, the ultrasonic sensor, infrared sensor and the electric circuit break detection circuit mounted on the body of the vehicle for detecting the thieving action, various kinds of thieving actions are reliably detected by the different functions of the various kinds of sensors.

Since the anti-theft device for the vehicle claimed in claim 6 comprises the anti-theft detection mechanism for the vehicle as claimed in claim 5 and the theft alarm mechanism for sounding an alarm by a signal from the theft detection mechanism or the thieving action detection mechanism for the vehicle, the thieving actions can be reliably detected by the different functions of the various kinds of sensors and the theft preventing effects can be improved by the theft alarm mechanism.

Since the anti-theft device for the vehicle claimed in claim 6 comprises the anti-theft detection mechanism for the vehicle as claimed in claim 4 or claim 5 and the ignition prohibiting mechanism for prohibiting ignition by a signal from the thieving action detection mechanism or the theft detection mechanism for the vehicle, if the thieving action is detected, the engine can not be started, thereby making it difficult to thieve the vehicle.

A theft detection mechanism is provided with a top ring 28 which is sunk when a foreign substance D other than a key K is inserted into a key inserting hole 32c and a sinking sensor for detecting that the top ring is sunken.

A top ring is inevitably pushed down when a foreign substance other than a key is inserted into a key inserting hole to activate a sinking sensor, thereby detecting thieving action with reliability. Moreover, a structure of a theft detection mechanism is made simple to reduce the cost thereof.

A theft detection mechanism is provided with a top ring 28 which is sunk when a foreign substance D other than a key K is inserted into a key inserting hole 32c and a sinking sensor for detecting that the top ring is sunken.

A top ring is inevitably pushed down when a foreign substance other than a key is inserted into a key inserting hole to activate a sinking sensor, thereby detecting thieving action with reliability. Moreover, a structure of a theft detect ion mechanism is made simple to reduce the cost thereof.

## Claims

1. Theft detection mechanism of a handle lock device (16) adapted to be built in a vehicle, said lock device (16) comprising
a fixed outer cylinder (26);
a crank shaft (32) rotatably mounted within the outer cylinder (26) and defining a key inserting hole (32c) for inserting a key (K);
a top ring (28) housed rotatably and movably up and down in the upper part of the lock outer cylinder (26) and having a key hole (28a) coextending which the key inserting hole (32c) of the crank shaft (32), a sinking sensor (29) with a projection (29a) abutting on the bottom surface of the lower flange (28b) of said top ring (28), wherein the top ring (28) is sunk towards the lock shaft (32) when a substance (D) other than the key (K) is inserted into the key inserting hole (32c); and the sinking sensor (29) detected that said top ring (28) is sunk.

2. Theft detection mechanism for a vehicle as claimed in claim 1, comprising a theft alarm mechanism (42, 52) for sounding an alarm by a signal (SS) from said theft detection mechanism (28, 29).

3. Theft detection mechanism for a vehicle as claimed in claim 1 or 2, comprising an ignition prohibiting mechanism (53) for prohibiting ignition by a signal (SA) from said theft detection mechanism (28, 29).

4. Theft detection mechanism for a vehicle as claimed in claim 1, comprising a thieving action detection mechanism (51) provided with at least one of a vibration sensor (55), an ultrasonic sensor (56), an infrared sensor (57) and an electric circuit break detection sensor (54) mounted on a body of the vehicle for detecting thieving action.

5. Theft detection mechanism for a vehicle as claimed in claim 4, further comprising a theft alarm mechanism (42, 52) for sounding an alarm by a signal (SS, SA) from said theft detection mechanism (28, 29) or said thieving action detection mechanism (51).

6. Theft detection mechanism for a vehicle as claimed in claim 4 or 5, further comprising an ignition prohibiting mechanism (53) for prohibiting ignition by a signal (SA) from said thieving action detection mechanism (51) or said theft detection mechanism (28, 29) for a vehicle.

## Patentansprüche

1. Diebstahldetektionsmechanismus einer Lenkerschlossvorrichtung (16), die zum Einbau in ein Fahrzeug ausgelegt ist, wobei die Schlossvorrichtung (16) umfasst:
einen festen Außenzylinder (26);
eine Kurbelwelle (32), die in dem Außenzylinder (26) drehbar angebracht ist und ein Schlüsseleinsetzloch (32c) zum Einsetzen eines Schlüssels (K) definiert;
einen Deckring (28), der in dem oberen Teil des Außenschließzylinders (26) drehbar und auf- und abbeweglich aufgenommen ist und ein Schlüsselloch (28a) aufweist, das sich gemeinsam mit dem Schlüsseleinsetzloch (32c) der Kurbelwelle (32) erstreckt, einen Absenksensor (29) mit einem Vorsprung (29a), der sich an der Bodenfläche des unteren Flansches (28b) des Deckrings (28) abstützt, worin der Deckring (28) zu der Schlosswelle (32) hin absinkt, wenn ein anderer Gegenstand (D) als der Schlüssel (K) in das Schlüsseleinsetzloch (32c) eingesetzt wird, und der Absenksensor (29) erfasst, dass der Deckring (28) abgesenkt wird.

2. Diebstahldetektionsmechanismus für ein Fahrzeug nach Anspruch 1,
umfassend einen Diebstahlalarmmechanismus (42, 52) zum Erzeugen eines Alarmtons durch ein Signal (SS) von dem Diebstahldetektionsmechanismus (28, 29).

3. Diebstahldetektionsmechanismus für ein Fahrzeug nach Anspruch 1 oder 2,
umfassend einen Zündverhinderungsmechanismus (53) zum Verhindern der Zündung durch ein Signal (SA) von dem Diebstahldetektionsmechanismus (28, 29).

4. Diebstahldetektionsmechanismus für ein Fahrzeug nach Anspruch 1,
umfassend einen Diebstahlvorgangdetektionsmechanismus (51), der mit zumindest einem eines Vibrationssensors (55), eines Ultraschallsensors (56), eines Infrarotsensors (57) und eines Stromkreisunterbrechnungs-Detektionssensors (54) versehen ist, der an einem Körper des Fahrzeugs angebracht ist, um einen Diebstahlvorgang zu detektieren.

5. Diebstahldetektionsmechanismus für ein Fahrzeug nach Anspruch 4,
der ferner einen Diebstahlalarmmechanismus (42, 52) umfasst, um, durch ein Signal (SS, SA) von dem Diebstahldetektionsmechanismus (28, 29) oder dem Diebstahlvorgangdetektionsmechanismus (51), einen Alarmton zu erzeugen.

6. Diebstahldetektionsmechanismus für ein Fahrzeug nach Anspruch 4 oder 5,
der ferner einen Zündverhinderungsmechanismus (53) umfasst, um, durch ein Signal (SA) von dem Diebstahlvorgangdetektionsmechanismus (51) oder dem Diebstahldetektionsmechanismus (28, 29) für ein Fahrzeug, die Zündung zu verhindern.

## Revendications

1. Dispositif détecteur de vol d'un dispositif de blocage des poignées (16) adapté pour être monté dans un véhicule, ledit dispositif de blocage (16) comprenant
un cylindre externe fixe (26) ;
un vilebrequin (32) monté de façon à pouvoir tourner à l'intérieur du cylindre externe (26) et définissant un trou d'insertion de clé (32c) pour insérer une clé (K) ;
une bague supérieure (28) logée de façon à pouvoir tourner et à se déplacer vers le haut et vers le bas dans la partie supérieure du cylindre externe de blocage (26) et ayant un trou de clé (28a) se co-étendant avec le trou d'insertion de clé (32c) du vilebrequin (32), un détecteur d'enfoncement (29) avec une partie en saillie (29a) butant sur la surface inférieure de la bride inférieure (28b) de ladite bague supérieure (28), dans lequel la bague supérieure (28) est enfoncée vers l'arbre de verrouillage (32) lorsqu'une substance (D) autre que la clé (K) est insérée dans le trou d'insertion de clé (32c) ; et le détecteur d'enfoncement (29) a détecté que ladite bague supérieure (28) est enfoncée.

2. Dispositif détecteur de vol pour un véhicule selon la revendication 1, comprenant un dispositif d'alarme de vol (42, 52) pour faire résonner une alarme par un signal (SS) à partir dudit dispositif de détection de vol (28, 29).

3. Dispositif détecteur de vol pour un véhicule selon la revendication 1 ou 2, comprenant un dispositif empêchant l'allumage (53) afin d'empêcher l'allumage par un signal (SA) provenant dudit dispositif détecteur de vol (28, 29).

4. Dispositif détecteur de vol pour un véhicule selon la revendication 1, comprenant un dispositif de détection d'une action de vol (51) au moins doté d'un détecteur de vibrations (55), d'un détecteur à ultrasons (56), d'un détecteur à infra-rouge (57) et d'un détecteur de détection de rupture de circuit électrique (54) monté sur une carrosserie du véhicule pour détecter un acte de vol.

5. Dispositif détecteur de vol pour un véhicule selon la revendication 4, comprenant en outre un mécanisme d'alarme de vol (42, 52) pour faire résonner une alarme par un signal (SS, SA) à partir dudit mécanisme de détection de vol (28, 29) ou dudit mécanisme de détection d'acte de vol (51).

6. Dispositif détecteur de vol pour un véhicule selon la revendication 4 ou 5, comprenant en outre un dispositif empêchant l'allumage (53) pour empêcher l'allumage par un signal (SA) provenant dudit mécanisme de détection d'action de vol (51) ou dudit mécanisme de détection de vol (28, 29) d'un véhicule.
